# EUROPEAN PATENT SPECIFICATION

(11) **EP 2 732 729 B1**
(45) Date of publication and mention of the grant of the patent: **26.12.2018**
(21) Application number: 12193035.8
(22) Date of filing: 16.11.2012
(51) Int. Cl.: A47F 3/00, A47F 11/10

(54) **Shelf tray with lighting unit**
Regalfach mit Beleuchtungseinheit
Plateau d'étagère avec unité d'éclairage

(43) Date of publication of application: 21.05.2014
(73) Proprietor: Diam UK Ltd, Leicestershire LE11 5XS (GB)
(72) Inventor: Kerr, Eamonn, Loughborough, Leicestershire LE11 5XS (GB); Mansell, Peter, Loughborough, Leicestershire LE11 5XS (GB); Allen, Martin, Loughborough, Leicestershire LE11 5XS (GB)
(74) Representative: Oxley, Robin John George

(56) References cited:
- EP-A1- 0 709 050
- WO-A1-2011/114026
- DE-U1-202006 004 865
- US-A1- 2005 082 450

## Description

This invention relates to a shelf tray for display shelving, in particular to point of sale display shelving for use in the cosmetics sector.

Display shelves in the retail sector are designed to improve the visual appeal for the customer. This is believed to enhance the product offering for open sale /free access items. Branding is particularly important in the cosmetics sector where purchase decisions are often made at the point of purchase and accordingly it is important to create as visually striking point of display as possible.

Display stands that have a rigid shelf system equipped with shelf modules for carrying and presenting cosmetics in an ordered fashion are well known in the retail environment. It is also well known for such stands to include graphic panels at their outer edges.

As many cosmetics also trade on their clinical elements displays are preferred to have a very clean look to them and as such good lighting of the products on display is important. However, the use of excessive lighting is not only harmful to the environment in terms of energy consumption but also creates heat which may, over time, soften cosmetic products, particularly those close to the lights. This may be particular problematic with such products as lipsticks and other cosmetics which include waxes and/or oils. Lighting units for display shelves, which provide for illuminated graphic panels and lighting of the display area, are known from patent documents DE 20 2006 004 865 U1 and US 2005/0082450 A1.

It is the object of the present invention to provide a shelf tray comprising a lighting unit for a cosmetic display that at assists in mitigating the above mentioned problems with known designs.

According to the invention there is provided a shelf tray according to claim 1 and a display shelf according to claims 11 and 12. A lighting unit for the front edge of a display shelf is provided for, the lighting unit comprising: a transparent or translucent elongate diffuser comprising an elongate upper edge, an elongate lower edge, an elongate front face and an elongate rear face, said diffuser having a recessed channel adjacent to and substantially extending along one of the elongate upper and lower edge; a lighting element located in said recessed channel, said lighting element comprising a plurality of light emitting diodes attached to a circuit board to form a light strip, wherein the light emitting diodes are oriented to direct light sideways through said
diffuser in a direction from one elongate edge towards the other elongate edge; and a substantially transparent elongate cover located over the diffuser and defining a gap there between for receiving a display graphic; wherein said diffuser scatters a portion of the light passing therethrough towards the cover so as to, in use, back light a display graphic in said gap; said diffuser transmits a portion of the light therethrough to be emitted at the elongate upper edge thereof; and a portion of the light is reflected by said lighting unit in a generally downward direction.

The invention enables a single light emitting diode (LED) strip light to provide multiple lighting to a product display, for example a cosmetics display. The lighting can provide an illuminated graphic which can include the brand name and an image, can provide up-lighting to the fronts of products on the shelf to which the lighting unit is applied, and can provide down lighting to products displayed on a shelf below the shelf to which the lighting unit is applied.

The recessed channel may be located adjacent the elongate lower edge. The LED's are preferably side emitting LED's that emit light from one side thereof and the light strip can be arranged in the recess in an orientation such that the light emitting side of the diodes are directed towards the upper edge. The up-lighting effect is produced by the light passing through the diffuser and exiting the top edge, the back lighting of the graphic is produced by the diffusion of some of the light as it passes through the diffuser, and the down lighting effect is produced buy a combination of sideways light bleed, refraction and reflection as the light passes emits from the LED's and passes into the diffuser from the channel. The circuit board of the LED's is preferably white or reflective and assists in reflecting light in a downwards direction.

One face of the diffuser can be provided with a surface texture to increase the amount of light scattered towards the cover. The surface texture may, for example, comprise a plurality of ridges. The ridges could be triangular, square, curved or another suitable shape. Alternatively the surface texture could comprise a three dimensional pattern on one face of the diffuser. The pattern may be provided on the rear face of the diffuser. Optionally a reflective panel, for example silver or white, may be attached to the rear face of the diffuser to decrease any light loss therethrough.

The diffuser may optionally comprise a first material comprising a polymer containing particles of a second transparent or translucent material having a different refractive index than the first material. In this manner the different refractive indexes assist in the scattering of light as it passes therethrough, which assists in the backlighting of a graphic placed in the gap.

The lighting unit further comprises a hinge adjacent the elongate upper edge that enables the lighting unit to be pivoted upwards from a display position to a service position. The display position is its normal in use position and the service position is a position it can be moved into for service, for example stock taking and restocking. An information panel may be provided pivotally attached to the lighting display towards a lower edge thereof. The information panel may be pivotal such that in the display position it is located behind the diffuser and is obstructed from view, and in the service position the information panel can be pivoted downwards to present service information to a user. The information panel may include channels therein for receiving paper or card containing printed indicia, for example alphanumeric data, barcodes, QR keys etc, that can be read or scanned by electronic equipment and which relates to the product on the shelf. In one preferred arrangement the information panel maybe pivotally attached to the rear surface of the diffuser by means of a live hinge, at a position inward of the recess.

According to the invention a shelf tray for displaying products on a shelf is provided for, said shelf tray comprising: a support structure comprising a front section having location means for alignment, in use, with the front edge and the top surface of a shelf; and the lighting unit attached to said support structure; wherein said lighting unit partially overhangs the front section of the shelf tray. The support structure allows for tray alignment on the shelves and the overhang permits the light being emitted downwards to illuminate the top of articles placed on a shelf beneath the lit shelf. The lighting unit is pivotally attached to the shelf tray, and the shelf tray front section comprises a lighting unit support structure to support said lighting unit at an incline. The incline presents the graphic display so as to be easily read by a consumer and also directs the up-lighting in a backwards direction towards the product on the display shelf.

In one arrangement the shelf tray further comprises: joining means at either edge thereof for attachment to other shelf trays, bus bar power distribution tracks running substantially along its length for electrical connection with an adjacent shelf tray; and electrical connection means for connecting the lighting element to the bus bar for the supply of electricity thereto. In this manner a modular shelving system can be provided that also includes an integrated power supply to the lighting units so that they do not each need to be individually connected to a source of electricity, for example by flying leads. In one arrangement the shelf tray may include a recess therein in which the bus bar is exposed such that, in use, display modules placed on the shelf tray can be located so as to extend into said recess to electrically connect to said bus bars. In a preferred arrangement, accessories may alternatively be powered by a shoe provided to pick up power in the track and transmit the power to the accessory via a flying lead, rather than by direct transmission to any contacts in the accessory body.

The invention further relates to a display shelf comprising a support structure supporting a plurality of shelves, and a plurality of shelf trays according to the invention on each said shelf. When used with the shelf trays having the integral bus bar as described above, the display unit may further comprise an end panel attached to the end of at least one of the shelf trays, the end panel can comprise an electrical connector on one face thereof for connection to the bus bar. A further electrical connector can be attached thereto for connection to a source of electricity.

Examples will now be described, with reference to the Figures, in which:
Figure 1 shows an arrangement of display shelves suitable for incorporation of the display shelf of the present invention;
Figure 2 shows a perspective view of a shelf tray arrangement in accordance with an embodiment of the present invention;
Figure 3A shows a cross-sectional side view of a shelf tray in accordance with an embodiment of the present invention in a display position;
Figure 3B shows an enlargement of the lighting unit of Figure 3A;
Figure 4A shows a cross-sectional side view of a shelf tray of Figure 3A, provided on a shelf, the tray being in a service position;
Figure 4B shows an enlargement of the lighting unit of Figure 4A;
Figure 5 shows a perspective view of a shelf tray component;
Figure 6A shows a perspective view of a shelf tray component;
Figure 6B shows a cross-section of the shelf tray component of Figure 6A; and
Figure 7 shows a perspective view of a shelf tray component.

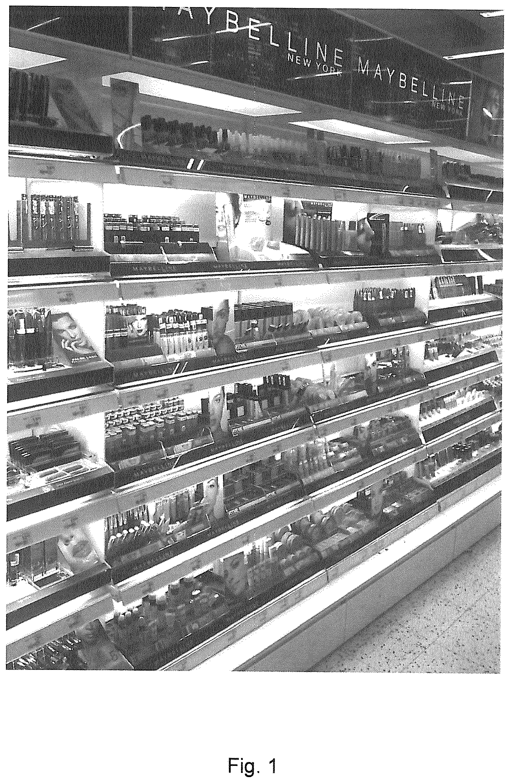

Fig. 1 shows a retail shelving system composed of several display units. A display unit comprises a plurality of wall mounted or panel mounted shelves. A display unit may be provided in different heights depending on the retail environment. The typical maximum height for self access shelving units is within the average customer's arms reach, e.g. about 2 metres high. Shelving units may be smaller, e.g. shoulder high. Several horizontal or inclined shelves are carried on a display unit. The shelves are vertically spaced apart so as to allow an appealing product offering. To maximise shelving space, shelves are provided at ankle and knee level. Illumination systems are provided to improve the visibility of the products.

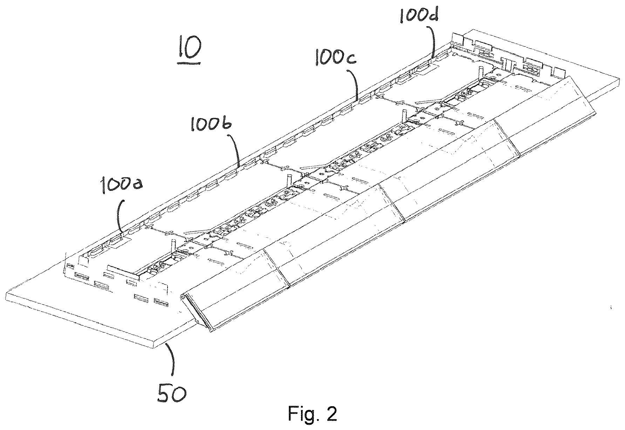

Fig. 2 shows a shelf tray arrangement 10 provided on a shelf 50. Shelf 50 may be a shopfit glass or solid shelf. Shelf 50 may be a horizontal shelf or may be inclined at an angle. Shelf tray arrangement 10 comprises a plurality of individual shelf trays 100 comprising individual shelf tray units 100a, 100b, 100c, 100d, which can be connected to one another.

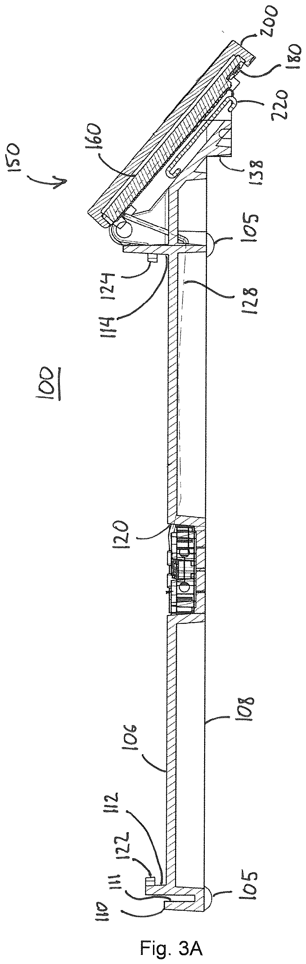

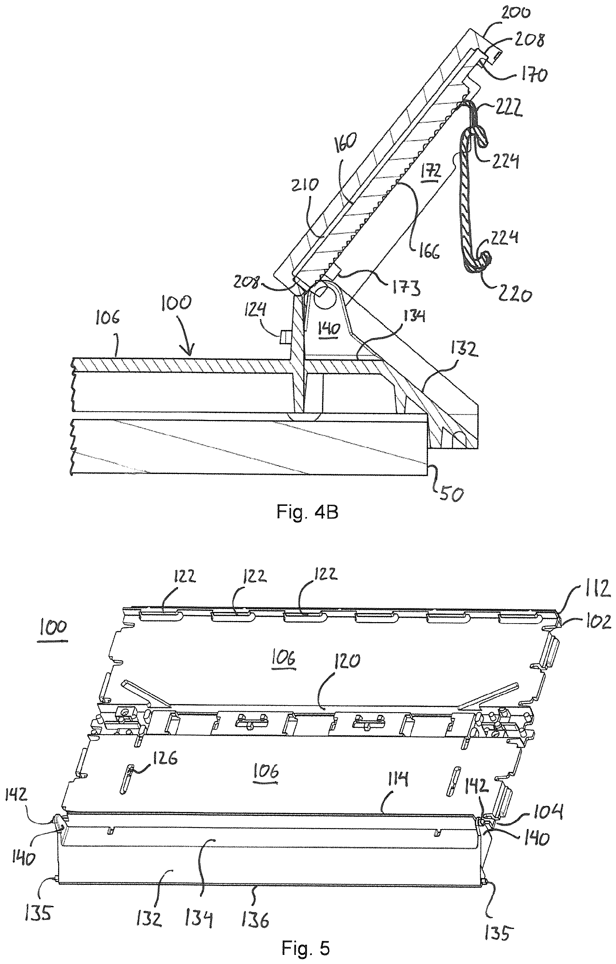

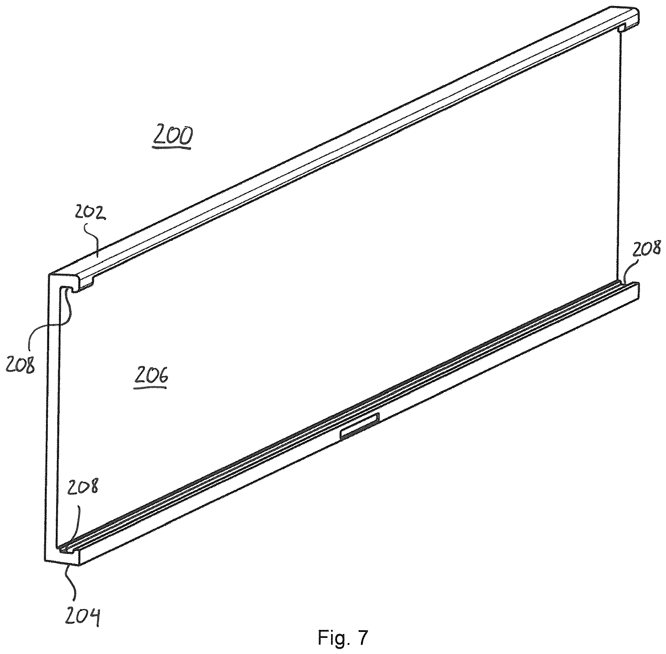

Figs. 3A to 4B show representative cross-sections of an assembled shelf tray 100, whereas Figs. 5 to 7 show perspective views of components of shelf tray 100. Corresponding numerals are used throughout Figs. 2 to 7. Shelf tray 100 may have any width. However, shelf trays of about 20 to 30 centimetres width have been found to be particularly suitable for a modular system.

An assembled shelf tray 100 is shown in Figs. 2 to 4B, and the tray component in isolation is shown in Fig. 5. Shelf tray 100 comprises a first end 104 and a second end 102. In use, when the shelf tray 100 is installed in a retail environment, the first end 104 faces the customer and the second end extends away from the customer, e.g. towards the rear of a shelving unit. Thus, the first end defines a front side which is the customer-facing end. A flat portion 106 forms the upper surface of the shelf tray on which products or installations may be arranged.

Approximately mid-way between the first end 104 and the second end 102, a recess is formed in the upper surface 106 of the tray 100 to define a channel 120. Channel 120 extends laterally, parallel to the front side, and accommodates electrical tracking and wiring. The electrical components are part of a bus bar system. The shelf tray comprises one or more channels 126 for wiring 128 to be provided between the bus bar channel 120 and the electrical components.

On its underside, shelf tray 100 is provided with sets of feet 105 to support the shelf tray. The feet 105 may be height adjustable. The feet 105 may be made of a material that inhibits slipping, such as rubber. Preferably, the tray 100 is a plastics moulding and the underside of the tray 100 may comprise hollow portions to reduce the overall unit weight and material cost. The sides of shelf tray 100 are formed by skirting walls or reinforcing ribs 108 which may extend over a thickness 118. The shelf tray may be provided with additional reinforcing ribs 108.

Wall portions 112 and 114 extend upwards along the first and second ends 102, 104. The wall portions 112, 114 extend beyond the upper surface 106 and facilitate fixation of display elements on the upper surface. Each wall portion 112, 114 comprises one or more inward-facing protrusions 122, 124. The gaps between the protrusions and the upper surface 106 define a guide channel which allows surface fixtures to be slotted onto the upper surface 106.

Along the first end, one or more upward-facing hooks 110 extend upward behind the wall portion 112. The gap defined between the hooks 110 and wall 112 defines a slot 111 in which a panel may be accommodated. The panel may be a substrate for a graphic display.

The first end 104 comprises a forward facing front section 130. The front section 130 comprises a support 136 extending forward from the wall 114 at the height of upper surface 106. The support 136 has a first portion 134 and a second portion 132. The first portion 134 is a flat corresponding to the level of the top surface 106 which extends horizontally forward until it segues into the second portion 132 at a chamfer edge running parallel to the wall 114. The second portion 132 chamfers downwards from the horizontal portion 134 and extends forward and below the lower edge of the reinforcing ribs 108. The underside of the second portion 132 comprises a stepped edge 138 which provides a locating surface for location on a shelf 50.

When installed, the shelf tray 100 rests on the feet 105, and the locating surface of the stepped edge 138 can be pushed against the front edge of a shelf 50 on which the shelf tray 100 is to be provided. Thereby, alignment of the shelf tray 100 with the shelf 50 is facilitated. This aids achieving a neat appearance of the display shelf assembly. Further, the stepped edge 138 allows a configuration to be ensured in which the aligned front edge protrudes forward of a shelf 50.

On either side of the first portion 134 there is a side wall 140. Each side wall 140 carries a laterally outward facing protrusion 142 which serves as a hinge joint to carry the lighting unit 150 described below. On either side of the front section is a further laterally protruding support pin 135 which serves as a rest or stop for the lighting unit 150 as described below.

As shown in Figs. 3A to 4B, the lighting unit 150 is comprised of a diffuser 160, a LED strip 180, and a cover 200. The lighting unit 150 may further comprise an information panel 220.

The diffuser 160 is a moulded panel made of an acrylic-based clear compound that is optimised for its light transmitting properties. Suitable compounds are, for example PMMA's or modified PMMA's, such as those sold under the trade name Plexiglas (RTM), available from Evonik Industries AG, 64293 Darmstadt, Germany.

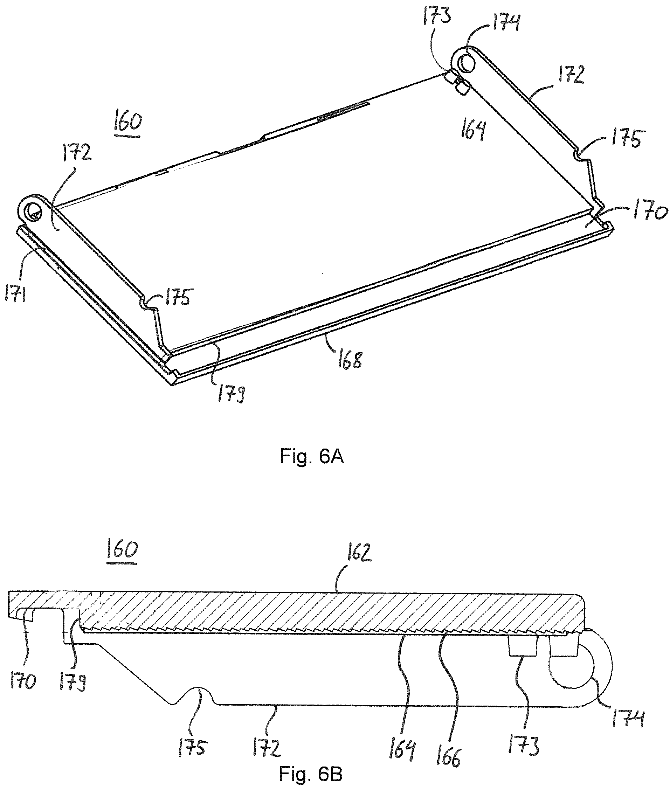

As shown in Fig. 6A, the diffuser 160 is substantially rectangular and has an elongate front face 162, an elongate rear face 164, an elongate upper edge, and an elongate lower edge 168. The rear face 164 has a surface texture 166 applied thereto. Surface texture 166 may be provided in the form of a plurality of laterally extending ridges covering at least a part of the rear face 164. Other surface treatment methods, for example shot blasting or moulded 3D textures may be employed to create the surface texture 166. Alternatively, a reflective panel may be provided on the rear surface 164 to prevent light form escaping therethrough and directing the light back into the diffuser. The reflective panel may be white or metallic and may be adhered to the rear surface 164.

A laterally extending longitudinal recess 170 is provided near the lower edge 168 on the rear face 164 of the diffuser 160. The recess 170 is dimensioned to receive an LED strip 180.

The diffuser 160 has two laterally depending side panels 172. Each side panel has an aperture 174 which is shaped to mate with the protrusion 142 of the side wall 140. A wire track 171 runs inboard or outboard of each side panel 172 and a wire trap 173 is provided near the aperture 174. The side panels 172 are spaced apart from another so as to allow them to be snap-fitted onto the protrusions 142 of side walls 140, thereby forming a hinged connection 178 allowing the diffuser 160 to pivot relative to the support 136. The edges of each side panel 172 have a notch 175 spaced from the aperture 174. Each notch 175 is spaced from the rear face 164. Wiring 128 that connects the LED strip 180 to the bus bar channel 120 is held near the hinged connection 178 by virtue of the wire trap 173 and leads from there through a wire track 171 to the LED strip 180. This arrangement helps ensuring that the wiring 128 required to supply power to the LED strip 180 does not impede the functionality of the lighting unit 150.

A cover 200 is attached to the diffuser 160. The cover 200 is a generally rectangular elongate body with a U-shaped cross-section, having side walls 202, 204. The side walls 202, 204 define a space 206 between them. The elongate dimension of cover 200 corresponds to that of the diffuser 160 onto which it is to be mounted. However, the height of the cover 200 is such that the diffuser 160 can be held in the space 206 defined by the side walls 202, 204. Walls 202, 204 comprise internal grooves 208 in which the elongate upper and lower edges of the diffuser 160 are retained. The grooves 208 are spaced from the inner surface of the cover 200. Thus, when the cover 200 is snapped onto the diffuser 160, the diffuser is retained at a predetermined distance defining a gap 210 between the inner surface of the cover 200 and the outer face 162 of the diffuser. The predetermined distance is wide enough to accommodate a substrate having a graphic printed thereon. The gap 210 opens to the sides of the lighting unit 150 so that a printed substrate can be inserted laterally. Alternatively or concurrently, at least part of the cover 200 may be provided with an information-containing element 212. The information-containing element 212 may be a self-adhesive panel. It may be decorative. The information-containing element may be applied to the outside of the cover 200. The self-adhesive panel may comprise a logo that is translucent so as to be suitable for back-illumination. The logo may have a dark-coloured vignette surround that is not fully opaque so as to enable it to glow slightly when illuminated from behind, thereby allowing various degrees of a silhouette effect to be achieved.

The hinged connection 178 allows the lighting unit 150 to be pivoted between a display position and a service position. In the display position the hinged connection 178 allows the diffuser 160 to depend from the support 136. In its display position, the diffuser 160 rests on the support pins 135 supporting the corresponding notches 175 and is thus generally aligned with the chamfered support portion 132. Because the notches 175 are spaced apart from the rear face 164, a gap 176 is defined between the upper surface of support portion 132 and the rear face 164 when the diffuser 160 lies on the support pins 135.

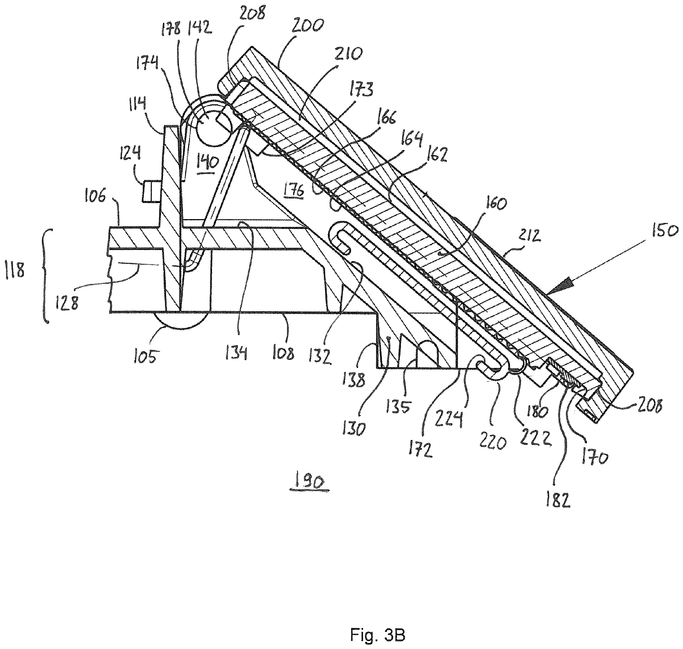

Fig. 3B shows an embodiment comprising an information panel 220 normal omitted from view. Information panel 220 is connected to the rear face 162 of the diffuser 160 by a live hinge 222. The live hinge 222 may be co-extruded as part of the information panel 220 and may comprise an elastomer material which provides flexibility and thus allows the information panel 220 to be pivoted relative to the diffuser 160 repeatedly while avoiding stress fracture. The information panel 220 comprises a slot or channel 224 in which an information-containing substrate can be retained.

Still referring to Fig. 3B, gap 176 is dimensioned to accommodate the information panel 220 in the display position, i.e., when the lighting unit 150 rests on the support pins 135. The information panel 220 is covered by the diffuser 160 / cover 200. The thickness of the information panel 220 can be variable but is designed to be accommodated without difficulty within the gap 176 between the support surface 136 and the rear face 164. By way of this arrangement, during normal use, i.e., in the display position shown in Figs. 3A and 3B, the information panel 220 can remain hidden from view, e.g. when a substrate is provided in slot 210.

LED strip 180 comprises a strip 182 carrying a plurality of side-illuminating LEDs. The individual LEDs are grouped densely together on one side of the strip. In an embodiment, the LEDs are spaced about 8 millimetres apart from another. On its other side the strip 182 comprises an adhesive layer which allows the strip 180 to be attached within the recess 170. The strip is opaque and may be made of a white or other reflective material. The strip may be a flexible circuit board that also contains other electronic components needed to control the LEDs. The LED strip 180 is oriented in the recess 170 so that the LEDs face a side wall 179 of the recess 170 and such that at least part of the light emitted from the LEDs is directed through the side wall 179 in a direction towards the elongate upper edge of the diffuser 160.

In its display position, the diffuser 160 rests on the support pins 135. The height of the diffuser 160 exceeds that of the support surface 136 so that the rear face 164 partially hangs over the front section 130. In particular, the recess 170 in which the LED strip 180 is provided hangs over the front edge of the front section 130. The LEDs of LED strip 180 are thus not concealed by the front section 130.

In operation, the LEDs of the lighting unit 150 emit light towards the elongate upper edge end of the diffuser 160 and against the inner side wall 179. A portion of light is directed into the diffuser 160, and passes straight through the diffuser 160. Diffuser 160 has a higher optical density than air and thus light within the diffuser 160 has an increased tendency to undergo total internal reflection. In the exemplary embodiment the surface texture 166 comprises an arrangement of a plurality of ridges which are shown as angular features in the drawings. These ridges interfere with the internal reflection of light reaching passing through the diffuser as they change the angle of incidence of the light upon the rear face and reflect and/or bend the light so that it passes back into the diffuser from the ridges at an angle that is too steep for internal reflection to occur when the light reaches the front face of the diffuser and a portion of the light is therefore enabled to escape the front face to back light the graphic located in the gap 210 between the diffuser 160 and the lighting unit 150. It will be appreciated by the skilled person that different surface textures aside from ridges can be used, providing that the effect is to disrupt the total internal reflection of light from the LED's so that light is enabled to escape the front face 162 of the diffuser 160.

As an alternative, or in addition to the surface texture, a polymer may be used which contains an additive which has light dispersing effects, suitable polymers are, for example, Plexiglas (RTM) LED LD12, Plexiglas (RTM) LED LD24, Plexiglas (RTM) LED LD48, or Plexiglas (RTM) LED LD96, all available from available from Evonik Industries AG. These polymers are a transparent or translucent main polymer having a filler of transparent or translucent particles having a different refractive index from that of the main polymer. As light passes therethrough it is bent as it encounters the filler particles and is scattered, thereby enabling light to be emitted from the diffuser substantially perpendicular to the direction of light travel therethrough. However as both the main polymer and the filler are transparent or translucent the material also allows for some of the light to pass therethrough without being deflected. Other polymers having the same effect may also be used.

The front face 162 is preferably flat, as shown, which facilitates the exit of light radiation impinging orthogonally to the plane of the front face 162, or impinging at any angle. Thus, the combination of the refractive index and the geometric arrangement of the diffuser 160 provide a reflection mechanism which causes a sufficient proportion of the LED-emitted light to be deflected so that it passes through the front face 162. This allows a substrate provided in the gap 210 to be backlit indirectly by the LED strip 180. The surface texture 166 assists in increasing the intensity of the back-light illumination to be provided.

In addition to the internal reflection mechanism some light may exit the diffuser 160 through the rear face 162. This light is not projected into a well-defined direction and can result in a pleasant diffuse illumination of the tray. However, it may not be desirable for this light to exit from the diffuser 160 and accordingly a reflective surface may be applied to the rear face 164 of the diffuser, for example a white or metallic surface. This could be adhered to the rear face 164 or may be applied as a coating, to promote the internal reflection of light from the rear face. A portion of the LED light is transmitted through the diffuser 160 and exits the diffuser 160 at the elongate upper edge which allows products on the shelf tray 100 to be illuminated creating an up-lighting effect.

The luminosity of the LED strip 180 is improved by densely packing the array of LEDs.

In addition to light being transmitted through or along the diffuser 160, a portion of the light emitted by LED strip 180 is reflected within the recess 170. The reflective properties of the strip 182, together with reflection by the walls of the recess and in boundaries between the diffuser 160 and the lighting unit 150, cause light to be emitted out of the recess 170 so that when the lighting unit 150 is in its display position, the light emitted from the recess 170 is emitted in a downward direction. The locating surface of the stepped edge ensures that the shelf tray protrudes over a shelf 50 on which it is provided. The combination of the locating surface and the unconcealed recess 170 allows the light reflected out of recess 170 to illuminate areas below the shelf tray 100, and consequently also areas below shelf 50. As can be seen in Figure 1 cosmetic display shelves are traditionally provided in stacks of shelves and accordingly the lighting unit can illuminate products on display on the shelf below that on which it is located. The cross-section of recess 170 can be configured to optimise the light distribution 190 (indicated in Fig. 3B) that illuminates the area underneath shelf 50. This provides more design freedom to achieve an illumination angle larger than that of hitherto known systems. In particular, as the diffuser 160 is at an inclined angle and as the sidewalls of the recess 170 are substantially perpendicular to the diffuser 160, internal reflection of light within the recess 170 will cast a light distribution 190 that is thrown backwards at a wide spread angle allowing products towards the back of the shelf below to be evenly illuminated. The centre of the light spread may be oriented substantially normal to the diffuser and portions of the light spread horizontally and vertically.. Ways of modifying the surface and/or the geometry of the recess 170 will be apparent to the skilled person to allow the angle and intensity of the light distribution 190 below the shelf 50 to be altered.

Thus, in operation, the lighting unit 150 provides a multi-directional lighting solution, which enables back lighting of a display panel at the front of a shelf, illumination from below of products at the front of the shelf, and also down lighting of articles placed on a further shelf located below the lighting unit. This is all achieved with a single strip of LED lights thereby minimising the energy consumption of the lighting unit. Furthermore, by directing the light through the diffuser 160 prior to up-lighting product at the front of the shelf, the minimum distance of the light source from these products is increased. Even though LED's are far more efficient than incandescent or fluorescent lighting, they do still produce some heat and therefore, by increasing the minimum distance of the lighting from the product, heat exposure of the product, to which they would otherwise be exposed, is minimised and the design enables the diffuser and cover to function as a heat sink for the LED's.

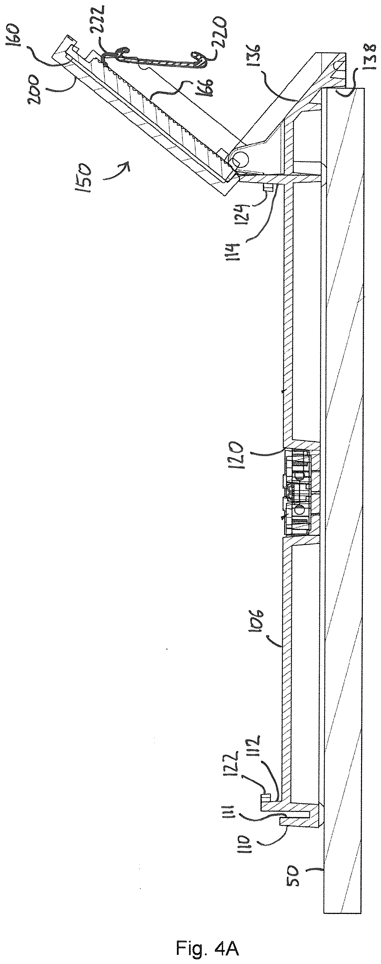

The lighting unit 150 can be pivoted about hinged connection 178 from a display position, shown in Figs. 3A and 3B, to a service position, shown in Fig. 4A and 4B. The shelf tray 100 may comprise a mechanism configured to sense whether or not the lighting unit is in the display condition. The mechanism may alter the illumination behaviour of the LED strip 180 when the lighting unit 150 is pivoted between the display position and the service position. Wiring is laid along the wiring track 171 to avoid interference of wiring 128 with the hinge mechanism.

When the lighting unit 150 is pivoted upwards into its service position, the information panel is not retained within the gap 176 and thus free to hang form the diffuser 160. The information panel 220 allows information to be made available for use by employees while remaining concealed from the customer. Such information can be used for stocking purposes and may comprise barcodes, QR keys or alpha numeric data or product information needed for stock management and restocking. An information panel 220 that depends flexibly from the lighting unit 150 allows the information to be accessed conveniently even if shelves are high up or at a low level, yet be concealed in the display position so that only the required product information is displayed to the customer.

## Claims

1. A shelf tray for displaying products on a display shelf, said shelf tray comprising:
a support structure comprising a front section having location means for alignment, in use, with the front edge and the top surface of a shelf; and
a lighting unit attached to said support structure and partially overhanging a front section of the shelf tray; wherein
the lighting unit (150) is pivotally attached to said shelf tray (100), and said shelf tray front section comprises a lighting unit support structure to support said lighting unit at an incline; and wherein
said lighting unit (150) comprises:
a transparent or translucent elongate diffuser (160) comprising an elongate upper edge, an elongate lower edge (168), an elongate front face (162) and an elongate rear face (164), said diffuser having a recessed channel (170) adjacent to and substantially extending along one of the elongate upper and lower edge;
a lighting element located in said recessed channel (170), said lighting element comprising a plurality of light emitting diodes (180) attached to a circuit board to form a light strip (182), wherein the light emitting diodes are oriented to direct light sideways through said diffuser (160) in a direction from one elongate edge towards the other elongate edge; and
a substantially transparent elongate cover (200) located over the diffuser (160) and defining a gap (210) there between for receiving a display graphic; and
a hinge adjacent the elongate upper edge that enables the lighting unit to be pivoted upwards from a display position to a service position; wherein
said diffuser (160) scatters a portion of the light passing therethrough towards the cover (200) so as to, in use, back light a display graphic in said gap; and wherein said diffuser transmits a portion of the light therethrough to be emitted at the elongate upper edge thereof; and a portion of the light emitted from the light emitting diodes is reflected by said lighting unit (150) in a downward direction.

2. The shelf tray of claim 1 wherein said recessed channel (170) is located adjacent the elongate lower edge.

3. The shelf tray of claim 1 or claim 2 wherein the light emitting diodes (180) are side emitting light emitting diodes that emit light from one side thereof and said light strip is arranged in said recess in an orientation such that the light emitting side of the diodes are directed towards the other of the upper and lower edge.

4. The shelf tray according to any one of the preceding claims wherein one face of the diffuser (160) is provided with a surface texture (166) to increase the amount of light scattered towards the cover.

5. The shelf tray according to claim 4 wherein said surface texture (166) comprises a plurality of ridges.

6. The shelf tray according to any one of the preceding claims wherein the diffuser (160) comprises a first material comprising a polymer containing particles of a second transparent or translucent material having a different refractive index than the first material.

7. The shelf tray of claim 1 further comprising an information panel (220) pivotally attached to the lighting display towards a lower edge thereof, said information panel pivotal such that in the display position it is located behind said diffuser (160) and is obstructed from view, and a such that, in the service position, the information panel can be pivoted downwards to present service information to a user.

8. The shelf tray according to claim 7 wherein the information panel (220) is pivotally attached to the rear surface of the diffuser (160) by means of a live hinge (222), at a position inward of the recess.

9. The shelf tray (100) according to claim 1 wherein the shelf tray further comprises:
joining means at either edge thereof for attachment to other shelf trays,
bus bar power distribution tracks running substantially along its length for electrical connection with an adjacent shelf tray; and
electrical connection means for connecting the lighting element to the bus bar for the supply of electricity thereto.

10. The shelf tray (100) according to claim 9 further comprising a recess in said shelf tray in which portions of said bus bar are exposed such that, in use, the recess may receive a power connector of a display module placed on the shelf tray so as to allow the display module to be electrically connected to said exposed portions of said bus bar.

11. A display shelf comprising a support structure supporting a plurality of shelves (50), and a plurality of shelf trays (100) according to any one of claims 1 to 10 on each said shelf.

12. A display shelf comprising a support structure supporting a plurality of shelves (50) and a plurality of interconnected shelf trays (100) according to claim 10 or 11, and an end panel attached to the end of at least one of said shelves, said end panel comprising an electrical connector on one face thereof for connection to said bus bar, and a further electrical connector attached thereto for connection to a source of electricity.

## Patentansprüche

1. Regalbodenfach zum Auslegen von Erzeugnissen auf einem Auslageregal, wobei das Regalbodenfach Folgendes umfasst:
eine Tragstruktur, die eine vordere Sektion umfasst, die Positionierungsmittel zur Ausrichtung, bei Anwendung, mit der vorderen Kante und der oberen Fläche eines Regalbodens aufweist, und
eine Beleuchtungseinheit, die an der Tragstruktur befestigt ist und teilweise eine vordere Sektion des Regalbodenfachs überragt, wobei
die Beleuchtungseinheit (150) schwenkbar an dem Regalbodenfach (100) befestigt ist und die vordere Sektion des Regalbodenfachs eine Beleuchtungseinheit-Tragstruktur umfasst, um die Beleuchtungseinheit mit einer Neigung zu tragen, und wobei
die Beleuchtungseinheit (150) Folgendes umfasst:
einen durchscheinenden oder lichtdurchlässigen länglichen Diffusor (160), der eine längliche obere Kante, eine längliche untere Kante (168), eine längliche vordere Fläche (162) und eine längliche hintere Fläche (164) umfasst, wobei der Diffusor einen ausgesparten Kanal (170) angrenzend an eine von der länglichen oberen und unteren Kante und sich m Wesentlichen entlang derselben erstreckend aufweist,
ein Beleuchtungselement, das in dem ausgesparten Kanal (170) angeordnet ist, wobei das Beleuchtungselement eine Vielzahl von Licht emittierenden Dioden (180) umfasst, die an einer Leiterplatte befestigt sind, um einen Lichtstreifen (182) zu bilden, wobei die Licht emittierenden Dioden ausgerichtet sind, um Licht seitwärts durch den Diffusor (160) in einer Richtung von der einen länglichen Kante zu der anderen länglichen Kante hin zu richten, und
eine im Wesentlichen durchscheinende längliche Abdeckung (200), die über dem Diffusor (160) angeordnet ist und dazwischen einen Spalt (210) zum Aufnehmen einer Auslagegraphik definiert, und
ein Scharnier angrenzend an die längliche obere Kante, das es ermöglicht, dass die Beleuchtungseinheit von einer Auslagestellung zu einer Wartungsstellung nach oben geschwenkt wird, wobei
der Diffusor (160) einen Teil des Lichts, das durch denselben hindurchgeht, zu der Abdeckung (200) hin streut, um so, bei Anwendung eine Auslagegraphik in dem Spalt zu hinterleuchten, und wobei der Diffusor einen Teil des Lichts durch denselben hindurchlässt, damit es an der länglichen oberen Kante desselben abgestrahlt wird, und ein Teil des von den Licht emittierenden Dioden abgestrahlten Lichts durch die Beleuchtungseinheit (150) in einer Abwärtsrichtung reflektiert wird.

2. Regalbodenfach nach Anspruch 1, wobei der ausgesparte Kanal (170) angrenzend an die längliche untere Kante angeordnet ist.

3. Regalbodenfach nach Anspruch 1 oder 2, wobei die Licht emittierenden Dioden seitlich abstrahlende Licht emittierende Dioden sind, die Licht von einer Seite derselben abstrahlen, und der Lichtstreifen in der Aussparung in einer derartigen Ausrichtung angeordnet ist, dass die Licht abstrahlende Seite der Dioden zu der anderen von der oberen und der unteren Kante hin gerichtet ist.

4. Regalbodenfach nach einem der vorhergehenden Ansprüche, wobei eine Fläche des Diffusors (160) mit einer Oberflächentextur (166) versehen ist, um die Menge an Licht, die zu der Abdeckung hin gestreut wird, zu steigern.

5. Regalbodenfach nach Anspruch 4, wobei die Oberflächentextur (166) eine Vielzahl von Stegen umfasst.

6. Regalbodenfach nach einem der vorhergehenden Ansprüche, wobei der Diffusor (160) ein erstes Material umfasst, das ein Polymer umfasst, das Teilchen eines zweiten durchscheinenden oder lichtdurchlässigen Materials enthält, das einen anderen Brechungsindex aufweist als das erste Material.

7. Regalbodenfach nach Anspruch 1, das ferner eine Informationstafel (220) umfasst, die schwenkbar an der Beleuchtungsauslage zu einer unteren Kante derselben hin angeordnet ist, wobei die Informationstafel derart angelenkt ist, dass sie in der Auslagestellung hinter dem Diffusor (160) angeordnet ist und für die Sicht verborgen ist, und derart, dass, in der Wartungsstellung, die Informationstafel nach unten geschwenkt werden kann, um einem Benutzer Wartungsinformationen darzubieten.

8. Regalbodenfach nach Anspruch 7, wobei die Informationstafel (220) mit Hilfe eines Filmscharniers (222), an einer Position, von der Aussparung nach innen, schwenkbar an der hinteren Fläche des Diffusors (160) befestigt ist.

9. Regalbodenfach (100) nach Anspruch 1, wobei das Regalbodenfach ferner Folgendes umfasst:
Verbindungsmittel an beiden Katen desselben zur Befestigung an anderen Regalbodenfächern,
Sammelschienen-Energieverteilungsbahnen, die im Wesentlichen entlang seiner Länge verlaufen, zur elektrischen Verbindung mit einem benachbarten Regalbodenfach, und
elektrische Verbindungsmittel zum Verbinden des Beleuchtungselements mit der Sammelschiene für die Zufuhr von Elektrizität zu demselben.

10. Regalbodenfach (100) nach Anspruch 9, das ferner eine Aussparung in dem Regalbodenfach umfasst, in der Abschnitte der Sammelschiene derart freigelegt sind, dass, bei Anwendung, die Aussparung einen Leistungsverbinder eines auf dem Regalbodenfach platzierten Auslagemoduls aufnehmen kann, um so zu ermöglichen, dass das Auslagemodul elektrisch mit den freigelegten Abschnitten der Sammelschiene verbunden wird.

11. Auslageregal, das eine Tragstruktur umfasst, die eine Vielzahl von Regalböden (50) und eine Vielzahl von Regalbodenfächern (100) nach einem der Ansprüche 1 bis 10 auf jedem Regalboden trägt.

12. Auslageregal, das eine Tragstruktur, die eine Vielzahl von Regalböden (50) und eine Vielzahl von miteinander verbundenen Regalbodenfächern (100) nach Anspruch 10 oder 11 trägt, und eine Endtafel, die am Ende wenigstens eines der Regalböden befestigt ist, umfasst, wobei die Endtafel einen elektrischen Verbinder an einer Fläche derselben zur Verbindung mit der Sammelschiene und einen weiteren elektrischen Verbinder, der damit verbunden ist, zur Verbindung mit einer Elektrizitätsquelle umfasst.

## Revendications

1. Plateau d'étagère pour présenter des produits sur une étagère de présentation, ledit plateau d'étagère comprenant :
une structure de support comprenant une section avant comportant des moyens de positionnement pour assurer en service un alignement avec le bord avant et la surface supérieure d'une étagère ; et
une unité d'éclairage fixée sur ladite structure de support et surplombant en partie une section avant du plateau d'étagère ; dans lequel :
l'unité d'éclairage (150) est fixée de manière pivotante sur ledit plateau d'étagère (100), et ladite section avant du plateau d'étagère comprend une structure de support de l'unité d'éclairage pour supporter ladite unité d'éclairage au niveau d'une inclinaison ; et dans lequel :
ladite unité d'éclairage (150) comprend :
un diffuseur transparent ou translucide allongé (160) comprenant un bord supérieur allongé, un bord inférieur allongé (168), une face avant allongée (162) et une face arrière allongée (164), ledit diffuseur comportant un canal évidé (170) adjacent à l'un des bords supérieur et inférieur allongés et s'étendant sensiblement le long de celui-ci ;
un élément d'éclairage agencé dans ledit canal évidé (170), ledit élément d'éclairage comprenant plusieurs diodes électroluminescentes (180) fixées sur une carte de circuit imprimé pour former un ruban de lumière (182), dans lequel les diodes électroluminescentes sont orientées de sorte à diriger la lumière latéralement à travers ledit diffuseur (160) dans une direction allant d'un bord allongé vers l'autre bord allongé ; et
un couvercle allongé sensiblement transparent (200) agencé au-dessus du diffuseur (160) et définissant un espace (210) entre eux pour recevoir un graphique d'affichage ; et
une charnière adjacente au bord supérieur allongé permettant le pivotement de l'unité d'éclairage vers le haut, d'une position d'affichage vers une position de service ; dans lequel :
ledit diffuseur (160) diffuse une partie de la lumière le traversant vers le couvercle (200, pour rétroéclairer en service un graphique d'affichage dans ledit espace ; et dans lequel ledit diffuseur transmet une partie de la lumière à travers celui-ci en vue d'une émission au niveau de son bord supérieur allongé ;
et une partie de la lumière émise par les diodes électroluminescentes est réfléchie par ladite unité d'éclairage (150) dans une direction allant vers le bas.

2. Plateau d'étagère selon la revendication 1, dans lequel ledit canal évidé (170) est agencé de manière adjacente au bord allongé inférieur.

3. Plateau d'étagère selon les revendications 1 ou 2, dans lequel les diodes électroluminescentes (180) sont des diodes électroluminescentes à émission latérale émettant la lumière à partir d'un de leurs côtés, ledit ruban de lumière étant agencé dans ledit évidement dans une orientation telle que le côté d'émission de lumière des diodes est dirigé vers l'autre bord des bords supérieur et inférieur.

4. Plateau d'étagère selon l'une quelconque des revendications précédentes, dans lequel une face du diffuseur (160) est munie d'une texture de surface (166) pour accroître la quantité de lumière diffusée vers le couvercle.

5. Plateau d'étagère selon la revendication 4, dans lequel ladite texture de surface (166) comprend plusieurs nervures.

6. Plateau d'étagère selon l'une quelconque des revendications précédentes, dans lequel le diffuseur (160) comprend un premier matériau comprenant un polymère contenant des particules d'un deuxième matériau transparent ou translucide présentant un indice de réfraction différent de celui du premier matériau.

7. Plateau d'étagère selon la revendication 1, comprenant en outre un panneau d'information (220) fixé de manière pivotante sur l'affichage d'éclairage, vers un bord inférieur de celui-ci, ledit panneau d'information pouvant pivoter, de sorte que, dans la position d'affichage, il est agencé derrière ledit diffuseur (160) et est caché à la vue, et de sorte que, dans la position de service, le panneau d'information peut être pivoté vers le bas pour présenter des informations de service à un utilisateur.

8. Plateau d'étagère selon la revendication 7, dans lequel le panneau d'information (220) est fixé de manière pivotante sur la surface arrière du diffuseur (160) par l'intermédiaire d'une charnière vive (222), au niveau d'une position située à l'intérieur de l'évidement.

9. Plateau d'étagère (100) selon la revendication 1, dans lequel le plateau d'étagère comprend en outre :
des moyens de liaison au niveau de chacun de ses bords en vue de la fixation à d'autres plateaux d'étagère ;
des pistes de distribution d'énergie à barre collectrice s'étendant sensiblement le long de sa longueur en vue de la connexion électrique à un plateau d'étagère adjacent ; et
des moyens de connexion électrique pour connecter l'élément d'éclairage à la barre collectrice en vue de son alimentation en énergie.

10. Plateau d'étagère (100) selon la revendication 9, comprenant en outre un évidement dans ledit plateau d'étagère, dans lequel des parties de ladite barre collectrice sont exposées de sorte qu'en service, l'évidement peut recevoir un connecteur d'alimentation d'un module d'affichage placé sur le plateau d'étagère pour permettre la connexion électrique du module d'affichage auxdites parties exposées de ladite barre collectrice.

11. Etagère de présentation comprenant une structure de support supportant plusieurs plateaux (50), et plusieurs plateaux d'étagère (100) selon l'une quelconque des revendications 1 à 10 sur chaque dite étagère.

12. Etagère de présentation, comprenant une structure de support supportant plusieurs plateaux (50), et plusieurs plateaux d'étagère interconnectés (100) selon les revendications 10 ou 11, et un panneau d'extrémité fixé sur l'extrémité d'au moins une desdites étagères, ledit panneau d'extrémité comprenant un connecteur électrique sur une de ses faces en vue de la connexion à ladite barre collectrice, et un connecteur électrique additionnel qui y est fixé en vue de la connexion à une source d'électricité.
